# EUROPEAN PATENT APPLICATION

(11) **EP 4 741 429 A1**
(43) Date of publication of application: **13.05.2026**
(21) Application number: 24218388.7
(22) Date of filing: 09.12.2024
(51) Int. Cl.: C08F 112/14, C08L 25/18, C08F 2/00, C08L 23/12

(54) **LOW MOLECULAR WEIGHT POLYBROMOSTYRENE AS FLAME RETARDANT, PROCESS OF MANUFACTURE AND APPLICATIONS THEREOF**

(30) Priority: 12.11.2024 US 202463719256 P
(71) Applicant: LANXESS Corporation, Pittsburgh, PA 15275-1112 (US)
(72) Inventor: HE, Qingliang, Cheshire, CT 06410 (US); SIMPSON, Christopher, Cheshire, CT 06410 (US); CLARKE, Joshua, Naugatuck, CT 06770 (US); BARTLEY, David W., El Dorado, AR 71730 (US)
(74) Representative: Uehlin, Lars

(57) **Abstract**

Low molecular weight polybromostyrene having a molecular weight of about 1,000 to about 10,000 g/mol, based on gel permeation chromatography and polystyrene standards, and processes for producing the same by polymerization of bromostyrene monomer.

## Description

### FIELD OF THE INVENTION

The present invention relates generally to polymers of brominated styrene, and more particularly to methods for polymerization of brominated styrenes, as well as their application as a flame retardant.

### BACKGROUND OF THE INVENTION

Brominated polystyrene has been identified by the US Environmental Protection Agency (EPA) as a potential alternative to decabromodiphenyl ethane (DBDPE) and decabromodiphenyl ether (DecaBDE) flame retardants used in a variety of applications, including textiles, plastics, wiring insulation, and building and construction materials. Low molecular weight versions of brominated polystyrenes are desirable for their high bromine content relative to size, better integration into polymers, improved processing properties and compatibility with other additives. Additionally, they exhibit reduced blooming, low volatility, and cost efficiency.

Polymers of brominated styrene are produced by one of two basic methods--the bromination of polystyrene or the polymerization of bromostyrene monomers. In general, the materials made by the two production methods are not equivalent. For example, bromination of polystyrene will result in undesirable side chain halogenation, causing a reduction in thermal stability or requiring expensive treatment to remove the more labile bromine atoms. Polymers prepared by the polymerization of bromostyrene do not have undesirable side chain halogenation and are preferred for their relatively greater thermal stability.

Not only do the two methods of preparing brominated polystyrenes provide different end products, but there are also numerous disadvantages inherent to the bromination of polystyrene approach. First, such methods require that the polymer be solubilized, necessitating isolation and purification procedures that may add significantly to production costs. Also, because the product is recovered from solution, the final product will be a dusty powder unless some type of compaction step is included at additional cost. Similarly, unless a post-production compounding step is used, the introduction of co-additives is limited to dry blending with other powders.

US 2007/0004870 A1 discloses bromination of polystyrene (prepared by anionic polymerization), having a weight-average molecular weight of 8,000-50,000, where bromine (Br₂) was used as a brominating agent and AIX₃ (where X is Cl or Br) was used as Lewis acid catalyst to increase the rate of reaction, giving brominated polystyrene with 66-72 wt% bromine content. Low orthobromine substitution leads to higher melt flow and lower color compared to previous examples of brominated polystyrene. Bromination reactions were carried out in bromochloromethane. However, thermally labile bromines in the aliphatic chain cause HBr to release at high temperatures and discoloration occurs, which must be treated post-reaction. Additionally, bromochloromethane is a halogenated solvent that may be considered hazardous waste and a regular expense if not recycled.

Likewise, US 2010/0087620 A1 discloses bromination of polystyrene with Br₂ and AIX₃. The brominated polystyrene has a weight-average molecular weight of 2,000-30,000 and is brominated to 60-71 wt% with methylene chloride solvent. Reaction workup includes washes to remove bromides and quench residual acid. Methylene chloride is banned by the EPA and washes decrease productivity and incur cost. This process also produces thermally labile bromines in the aliphatic chain that cause HBr to release at high temperatures and results in discoloration, which must be treated post-reaction.

US 8,802,787B2 and WO 2010/065462 also describes an approach to manufacture low molecular weight polystyrene through an anionic polymerization technique. Tetramethylethylene diamine-stabilized alkyl lithium initiates the polymerization of styrene (through the intermediacy of a benzyl anion) under inert atmosphere and rigorously dried solvents. The final product must be treated with aqueous sodium hydroxide to quench residual hydrobromic acid and sodium borohydride to reduce brominated amines and thermally labile bromines on the polymer alkyl backbone caused by the bromination reaction. The washes decrease productivity and incur cost. In addition to the issues with thermally labile bromines in the aliphatic chain and hazardous waste from the bromochloromethane solvent, alkyl lithium reagents are pyrophoric and require rigorous drying of reaction solvents, adding to cost.

US20230272185A1 discloses a very low molecular weight brominated polystyrene produced by anionic polymerization of styrene, followed by bromination of such polystyrene, and used as flame retardant alternative to DBDPE in polyolefins. The process creates thermally labile bromine in the polymer product and a glow suppressant is necessary in filled polyolefin to mitigate afterglow issue during UL 94 flame test.

The polymerization of bromostyrene has several advantages over the bromination of polystyrene. As mentioned, it provides a more thermally stable product because side chain halogenation is avoided. Also, this method can be used to produce a continuum of molecular weights and bromine contents.

US 5,304,618 discloses a process for the solventless polymerization of brominated styrenes, comprising the steps of: (a) blending monomers of brominated styrenes with a polymerization initiator; (b) feeding the monomer/polymerization initiator mix into a prepolymerizer wherein the monomers begin to polymerize; and (c) feeding the monomer/polymerization initiator mix and the partially polymerized bromostyrene into a screw-type extruder to drive the polymerization to a high degree of completion in a short period of time. This process requires temperatures in excess of 100 °C and the final product is orange in color with granular/pelletized morphology. Moreover, material having higher molecular weight did not exhibit sufficient flame retardancy to replace DBDPE and DecaBDE in polyolefin formulations.

US 5,369,202 also teaches a continuous process for the solventless polymerization of brominated styrenes, which can produce a low molecular weight brominated polystyrene. Like US 5,304,618, Example 5 of this patent teaches material with an average M_{PS} of 8,600 with a residual monomer content of 0.45% was produced using 4.5% of a mixture of t-butylperoctoate, 1-dodecanethiol, t-butylperoctoate, t-butylperbenzoate, and 1-dodecanethiol monomers in a Werner & Pfleiderer twin screw extruder having 8 extruder zone temperatures ranging from 155-220°C. However, peak molecular weight M_{PS} is an unreliable and unrealistic measure of a molecular weight distribution for polymeric materials; it gives no indication of the actual molecular weight distribution of the product. Moreover, the reported glass transition of 35 °C indicates that polystyrene may not actually have been produced.

US 5,565,538 discloses random copolymers of halostyrene and glycidyl (meth)acrylate units wherein the copolymer has a peak molecular weight compared with a polystyrene standard of about 500 to about 200,000. The copolymers are prepared by combining the styrene and glycidyl monomers with a radical initiator such as dicumyl peroxide, benzoyl peroxide, t-butyl perbenzoate, 2,2'-azobis(isobutyronitrile), cumenehydroperoxide or the like in an extruder or in a kneading type mixer such as a Banbury.

US 5,066,752 discloses flame retardant copolymers comprising ring-halogenated, ethylenically unsaturated aromatic monomers and aliphatic conjugated dienes having from 4 to 10 carbon atoms prepared by solution, bulk, emulsion and suspension polymerization, which may be carried out at temperatures ranging from -30° to 110° C. Suitable initiators include the initiators used for free radical polymerization such as organic peroxides, hydroperoxides, azo or diazo compounds, persulfates, redox systems, etc. The copolymers and terpolymers have a molecular weight of at least about 25,000, preferably at least about 100,000.

US 3,328,374 discloses a process for the suspension polymerization of styrene. Polymerization of styrene was initiated by organic soluble peroxo- or azo-initiators, dispersed in water where the suspension was stabilized by tricalcium phosphate, sodium beta naphthalene sulfonate and sodium polyacrylate. The suspension agents had to be milled into a paste to obtain best results. The pH had to be adjusted to retain the insolubility of the suspension agents.

US 3,799,907 discloses suspension polymerization of styrene initiated by organic soluble radical initiator in water. The suspension was stabilized by polyvinylalcohol. Other additives, including bisphenol A and sodium acetate, were used to control clarity of polystyrene beads.

It is desirable to have alternative and improved methods of preparing polymers of brominated styrenes via polymerization of brominated styrenes that are able to produce polymers having a molecular weight below 25,000 but above 1,000, as determined by GPC, such as where the molecular weight is about 1,000 to about 10,000, or about 2,000 to about 5,000, which can be used as alternatives to decabromodiphenyl ethane and decabromodiphenyl ether. It is desired to have methods of preparing polybromostyrene utilizing temperatures under 100°C and which can produce alternative morphologies to polymer product produced by existing processes.

A problem that often persists in a polyolefin containing a flame retardant after the flame is extinguished is glow (sometimes called afterglow). Long glow times are not acceptable in some applications. Therefore, it is desirable to produce low molecular weight polymers of brominated styrene that, when utilized as a flame retardant in polyolefins, do not exhibit afterglow.

It is an object of the present disclosure to provide low molecular weight polybromostyrene having thermal stability, which is made by processes that do not result in undesirable side chain halogenation. It is an object of the invention to provide an environmentally friendly process for preparing polybromostyrene utilizing reaction temperatures under 100°C and environmentally friendly reaction agents. It is also an object of the invention to provide a process for preparing low molecular weight polybromostyrene product where the number average molecular weight is within the range of about 3,000 to about 4,000, and with improved size control/morphology and low color. It is further an object of the invention to provide a low molecular weight polybromostyrene having low color, improved morphology, and which does not exhibit afterglow when utilized as a flame retardant with polyolefins.

### SUMMARY OF THE INVENTION

The foregoing is achieved by provision of processes for the polymerization of brominated styrenes and low molecular weight polydibromostyrene (PDBS) made therefrom. The polybromostyrenes have a number average molecular weight (Mn) below 25,000, but above 1,000, as determined by GPC.

In a first aspect, a process for polymerizing brominated styrenes comprises dissolving a hydrocarbon soluble initiator and a hydrocarbon soluble chain transfer agent in a liquid bromostyrene monomer to form a dissolved mixture and dispersing the dissolved mixture in an aqueous medium containing an organic suspending agent. Advantageously, the process does not require controlling pH of the aqueous medium; the pH of the aqueous medium does not need to be maintained above 5.9.

In some embodiments, the process further comprises the step of agitating the dispersed reaction mixture at a temperature of about 30 to about 60°C, preferably about 40 to about 55°C, more preferably about 50°C to form droplets.

The process can further comprise increasing the temperature to about 70 to about 140°C, preferably about 80 to less than 110°C, more preferably about 85 to about 100°C, most preferably about 90°C, to polymerize and produce beads.

The hydrocarbon soluble initiator can be charged as about 0.05 to about 5.0 wt%, preferably about 0.5 to about 2.5 wt%, more preferably about 1.0 to about 2.0 wt%, based on the weight of the bromostyrene monomer. In certain embodiments, the hydrocarbon soluble initiator is an azo compound, preferably 2,2'-azobis(2,4-dimethylvaleronitrile).

The hydrocarbon soluble chain transfer agent can be charged as about 0.05 to about 5.0 wt%, preferably about 0.5 to about 2.5 wt%, more preferably about 1.5 to about 2.0 wt%, based on weight of the of bromostyrene monomer. In certain embodiments, the hydrocarbon soluble chain transfer agent is a thiol compound, preferably dodecylmercaptan,

In some embodiments, the bromostyrene monomer comprises a mixture of mono-, di-, and tribromostyrene monomers. In certain of those embodiments, the bromostyrene monomer comprises about 50 to about 70 wt% bromine, preferably about 55 to about 65 wt% bromine, more preferably about 60 to about 64 wt% bromine.

The concentration of the organic suspending agent is about 0.5 to about 5.0 g/L, preferably about 1.0 to about 2.5 g/L, more preferably about 1.5 to about 1.75 g/L, most preferably about 1.7 g/L.

In certain embodiments, the organic suspending agent is polyvinyl alcohol, preferably 87-89% hydrolyzed polyvinyl alcohol having a weight-average molecular weight of 146,000-186,000 g/mol.

In a second aspect, a process for preparing polydibromostyrene having a molecular weight below 25,000, as determined by GPC, such as where the molecular weight is about 1,000 to about 10,000, or about 2,000 to about 5,000, or about 3,000 to about 4,000 is provided. The process comprises the steps of dissolving 2,2'-azobis(2,4-dimethylvaleronitrile) and dodecylmercaptan in a liquid mixture of mono-, di-, and tribromostyrene monomers to form a dissolved mixture; dispersing the dissolved mixture in an aqueous medium containing hydrolyzed polyvinyl alcohol having a weight-average molecular weight of 146,000-186,000 g/mol; agitating the dispersion at temperature of about 45 to about 55 °C; and increasing the temperature of the agitated dispersion to about 85 to about 95 °C to polymerize. In certain embodiments, the hydrocarbon soluble initiator is charged as about 0.5 to about 2.5 wt%, preferably about 1.0 to about 2.0 wt%, more preferably about 1.5 to about 1.6 wt%, based on the weight of the bromostyrene monomer and the hydrocarbon soluble chain transfer agent is charged as about 1.0 to about 3.0 wt%, preferably about 1.5 to about 2.5 wt%, more preferably about 1.8 to about 1.9 wt%, based on weight of the of bromostyrene monomer.

In a third aspect, a process for polymerizing brominated styrenes comprises, heating a first hydrocarbon soluble initiator, a hydrocarbon soluble chain transfer agent, and a liquid bromostyrene monomer in a prepolymerizer to form a monomer mixture, feeding the heated monomer mixture into an extruder, adding a second hydrocarbon soluble initiator, and extruding pellets of polybromostyrene. Preferably, heating occurs at a temperature range of about 150 to about 180 °C, the extruder is a twin screw extruder, and feed rate into the extruder is about 900 lb/h (6804 g/min).

The first hydrocarbon soluble initiator can be charged as about 0.05 to about 5.0 wt%, preferably about 0.25 to about 2.5 wt%, more preferably about 0.5 to about 1.0 wt%, based on the weight of the bromostyrene monomer. In certain embodiments, the first hydrocarbon soluble initiator is an azo compound, preferably 2,2'-azobis(2,4-dimethylvaleronitrile).

The one or more hydrocarbon soluble chain transfer agents can be charged as about 0.05 to about 5.0 wt%, preferably about 0.5 to about 3.0 wt%, more preferably about 1.0 to about 2.0 wt%, based on weight of the of bromostyrene monomer. In certain embodiments, the hydrocarbon soluble chain transfer agent comprises a thiol compound, preferably dodecylmercaptan.

In some embodiments, the bromostyrene monomer comprises a mixture of mono-, di-, and tribromostyrene monomers. In certain of those embodiments, the bromostyrene monomer comprises about 50 to about 70 wt% bromine, preferably about 55 to about 65 wt% bromine, more preferably about 60 to about 64 wt% bromine.

In certain embodiments, the second hydrocarbon soluble initiator is an organic peroxide, preferably cumyl hydroperoxide. The second hydrocarbon soluble initiator can be charged as about 0.1 to about 2.5 wt%, preferably about 0.2 to about 1.5 wt%, more preferably about 0.3 to about 1.0 wt%, based on the weight of the bromostyrene monomer.

In fourth aspect, a flame retardant composition comprises low molecular weight polydibromostyrene prepared by one of the foregoing processes. The polydibromostyrene has a number average molecular weight (Mn) below 25,000, but above 1,000, as determined by GPC. In certain embodiments, the molecular weight (Mn) is about 1,000 to about 10,000, or about 2,000 to about 5,000, preferably about 3,000 to about 4,000. In certain embodiments, the produced polybromostyrene has an APHA solution color of less than 100 following heat ageing for eight hours at 243 °C in a test tube. In some embodiments, a 20 mg/mL solution of the polybromostyrene dissolved in toluene has a color value less than 2, preferably less than 1, more preferably less than 0.7, based on ASTM D1500-33mm. The flame retardant composition may further comprise an impact modifier selected from maleic anhydride grafted polyolefins, chlorinated polyolefins, and rubber compounds, such as Styrene-Ethylene-Butylene-Styrene (SEBS), ethylene propylene diene monomer (EPDM), styrene-butadiene-styrene (SBS), and poly(Styrene-block-IsoButylene-block-Styrene) (SIBS).

A fifth aspect is use of the low molecular weight polydibromostyrene made according to the processes disclosed herein as a flame retardant in flame retardant polymer compositions, such as a polyolefin composition. The low molecular weight polydibromostyrene can be used as a replacement for DBDPE and DecaBDE.

### DESCRIPTION OF THE DRAWINGS

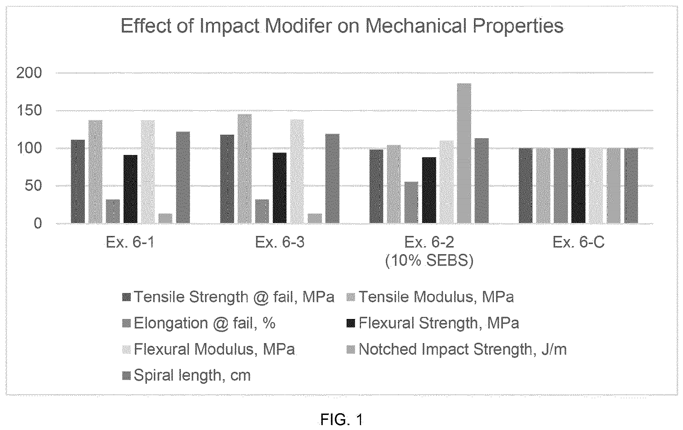

FIG. 1 is a bar chart showing the effect of impact modifier on mechanical properties of flame retardant polymer formulations of Example 6.

### DETAILED DESCRIPTION

Unless otherwise specified, the word "a" or "an" in this application means "one or more than one".

As used herein, a D10 or d10 value represents the 10^{th} percentile, a D50 or d50 value represents the 50^{th} percentile, and a D90 or d90 value represents the 90^{th} percentile. Thus, D50 corresponds to the median value. The D10, D50 and D90 values herein are determined using a laser scattering analyzer, unless indicated otherwise. If multiple measurements of a sample are taken, the values reported are an average of such measurements.

The recitation of numerical ranges by endpoints includes all numbers subsumed within that range (e.g., 1 to 5 includes 1, 1.5, 2, 2.75, 3, 3.80, 4, 5, etc.) Further, disclosure of ranges includes all subranges included within the broader range (e.g., 1 to 5 discloses 1-4, 1.5-4.5, 1-2, etc.).

"Mn" as used herein refers to number average molecular weight or the mass average with respect to the number of moles of each mass fraction.

"Molecular weight" as used herein refers to Mn unless otherwise indicated.

"Impact modifier" as used herein refers to a compound that is added to plastic resins to improve flexibility and/or impact strength. Typically impact modifiers absorb energy during impact and prevent cracks from propagating, which improves impact resistance of final plastic compound.

"Compatibilizer" as used herein refers to a compound/molecule that reduces the interfacial tension between two polymeric materials, enhancing the miscibility of such polymer blend/alloy, which results in better processability and improved mechanical properties.

Unless otherwise defined, all technical and scientific terms used herein have the same meaning as commonly understood by one of ordinary skill in the art to which this invention belongs. The materials, methods, and examples are illustrative only and not intended to be limiting. To the extent not described herein, many details regarding specific materials and processing acts are conventional and may be found in textbooks and other sources within the flame retardants field.

The present invention provides a process for polymerization of brominated styrenes comprising dissolving a hydrocarbon soluble initiator and hydrocarbon soluble chain transfer agent in a liquid bromostyrene monomer to form a dissolved mixture; and dispersing the dissolved mixture in an aqueous medium containing an organic suspending agent. The pH of the aqueous medium does not need to be controlled as in prior art processes. The process may further comprise agitating the dispersion until beads are formed and heating the beads to form a polymerized product.

Typically, the dissolved mixture consists essentially of the initiator, chain transfer agent and liquid bromostyrene. In preferred embodiments, the reaction mixture consists of the initiator, the chain transfer agent, and the liquid bromostyrene.

The brominated monomers may have the general formula 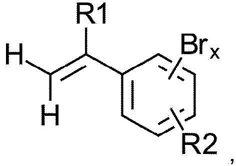 where R1=H, CH₃; R2=H, C₁₋₄ alkyl; x=1 to 5.

Preferred monomers are those in which R1=R2 H. The most preferred monomer is dibromostyrene (DBS), which may contain a mixture of mono-, di-, and tribromostyrene. As produced by Lanxess, DBS typically contains about 1 % monobromostyrene, 63% dibromostyrene, and about 36% tribromostyrene by weight. In one preferred embodiment then, the bromostyrene monomers comprise from about 0.1% to about 10% monobromostyrene, from about 25% to about 50% tribromostyrene, and from about 50% to about 75% dibromostyrene. In certain preferred embodiments, the bromostyrene monomer comprises 60-64 wt% bromine.

The initiators suitable in the processes herein are soluble in hydrocarbons. The initiator may be an organic peroxide, an azo compound, or dialkyl peroxydicarbonates can be used in some instances. Examples of organic peroxides which can be used include benzoyl peroxide, cumyl peroxide, t-butylhydroxyperoxide, di-t-butylperoxide, and other peroxy acid and hydroperoxides, preferably cumyl hydroperoxide (CHP). Azo compounds may suitably be N,N'-azobisisobutyronitrile, dimethyl-N,N'-azodiisobutyrate, N,N-azobis (2,4- dimethylvaleronitrile) and N,N'-azodiisobutyramide, preferably 2,2'-azobis(2,4-dimethylvaleronitrile).

Optionally, the initiator may be added as a solution in one more organic solvents.

The hydrocarbon soluble initiator is typically charged as about 0.05 to about 5.0 wt%, preferably about 0.5 to about 2.5 wt%, more preferably about 1.0 to about 2.0 wt%, based on the weight of the bromostyrene monomer.

Suitable chain transfer agents are thiol compounds, preferably dodecylmercaptan. The hydrocarbon soluble chain transfer agent is typically charged as about 0.05 to about 5.0 wt%, preferably about 0.5 to about 2.5 wt%, more preferably about 1.5 to about 2.0 wt%, based on weight of the bromostyrene monomer.

A wide range of organic water-soluble suspending agents known to the art can be employed in the process of the invention. These agents encapsulate monomeric globules. While polyvinyl alcohol is preferred, other suspending agents include cellulosic derivatives such as methyl cellulose and hydroxyethyl cellulose, polyvinylpyrrolidone, polyacrylamide, polyalkylene oxides, sulfonated polystyrenes, polyacrylics, polyacrylates, combinations thereof and the like.

In particularly preferred embodiments, the organic suspending agent is 87-89% hydrolyzed polyvinyl alcohol with weight-average molecular weight of 146,000-186,000 g/mol. Without wishing to be bound, it is theorized that polyvinyl alcohol having a high percentage of hydrolyzation may affect the process and result in unacceptable product.

The concentration of the organic suspending agent ranges from about 0.5 to about 5.0 g/L, preferably about 1.0 to about 2.5 g/L, more preferably about 1.5 to about 1.75 g/L, most preferably about 1.7 g/L.

After the initiator, chain transfer agent and bromostyrene are dissolved and dispersed in the aqueous medium with organic suspending agent, they are typically agitated to produce droplets. Various means known in the art are suitable for agitating the mixture, such as stir bar, propellor, blade, turbine, helical, anchor, paddle and the like. The steps of dispersing the mixture and agitating will typically occur from about 30 to about 60°C, preferably about 40 to about 55°C. In certain preferred embodiments, the agitation occurs at about 50°C.

A phenolic antioxidant, such as one selected from a group consisting of bisphenol-A, 1- naphthols, Z-naphthols, I,4-naphtholhydroquinones, and alkylhydroquinones, is not required for the polymerization to proceed, as is required in the process of US 3,799,907. As a result, and advantageously, the pH of the reaction mixture does not need to be maintained at an essentially neutral pH ranging from 5.8 to 7.8. Further, the reaction mixture does not require formation of a thixotropic paste consisting of water, particulate stabilizing agent, surface active agent and colloid, as in US 3,328,374. Utilization of the combination of the hydrocarbon soluble initiator and a hydrocarbon soluble chain transfer agent in the reaction mixture with the liquid bromostyrene allows for uncontrolled pH of the medium during polymerization.

The agitated mixture is heated within a range from about 70 to about 140°C, preferably about 80 to less than 110°C, more preferably about 85 to about 100 °C, until the droplets are polymerized to solid beads. In certain preferred embodiments, the reaction is heated to about 90°C to polymerize and produce beads. Generally, a range of 0.5-20 hours is a sufficient time. After cooling, the solid beads can be washed and recovered from the aqueous medium.

The beads can be optionally further purified using standard techniques for workup of the reaction product, such as isolating the flame retardant product (e.g., separating the flame retardant product from remaining solvent), and may include, e.g., processing the reaction product by filtering, sieving, washing, drying, and the like. The resulting flame retardant product is typically granular and does not require or necessitate grinding, milling, or other such physical processing before use.

The reaction as described herein may, but need not, be run under increased pressure, which can result in shorter reaction times.

Alternatively, the polybromostyrene, in particular polydibromostyrene, having the desired molecular weight can be prepared by a bulk polymerization, such as those described in US 5,304,618, utilizing the brominated monomers, initiators and chain transfer agents as described above and feeding the mixture into a screw-type extruder to drive polymerization to a high degree of completion in a short period of time. Optionally, the monomers may be preheated before mixing with some or all of the initiator.

In certain embodiments, dibromostyrene monomer (mixture of mono-, di- and tribromostyrene) is fed into a prepolymerizer and about 0.1 to about 5.0 wt.%, preferably about 0.3 to about 3.0 wt.%, of additives are added, based on weight of the monomer. Then the mixture can be fed into a commercial extruder at about 900 lb/h with additional additive. The feed rate of the additives can range from about 20 to about 100 g/min.

In certain embodiments, the extruder temperature ranges from 150-180 °C.

For instance, in one exemplary process, a first hydrocarbon soluble initiator, a hydrocarbon soluble chain transfer agent, and a liquid bromostyrene monomer are heated in a prepolymerizer to form a monomer mixture. The heated monomer mixture is fed into an extruder, and a second hydrocarbon soluble initiator is added prior to extruding pellets of polybromostyrene. Preferably, heating occurs at a temperature range of about 150 to about 180 °C, the extruder is a twin screw extruder, and feed rate into the extruder is about 900 Ib/h (6804 g/min). The first hydrocarbon soluble initiator is preferably 2,2'-azobis(2,4-dimethylvaleronitrile), the hydrocarbon soluble chain transfer agent is preferably dodecylmercaptan, the bromostyrene monomer comprises about 50 to about 70 wt% bromine, preferably about 55 to about 65 wt% bromine, more preferably about 60 to about 64 wt% bromine, and the second hydrocarbon soluble initiator is cumyl hydroperoxide. In such cases, it was found that dodecyl mercaptan concentration was the prime variable for controlling molecular weight of the resulting polybromostyrene, i.e., as dodecyl mercaptan concentration increased, Mₙ decreased.

The processes disclosed herein provide a flame retardant material, such as polydibromostyrene (PDBS). To be useful, a flame retardant should provide a desirable UL (Underwriters Laboratories, Inc.) 94 flammability rating. The UL 94 test is a vertical burning test. A material having a V-0 rating allows only minimal burning and no flaming drip of a standard bar of specified thickness. The V-1 rating applies to a material which allows longer burn times than the V-0, but not flaming drip. The V-2 rating results for a material that allows the same burn time as for the V-1 rating, and also allows flaming drip. Materials which do not meet the V-0, V-1, or V-2 criteria receive a fail rating. Compositions having UL 94 ratings from V-0 to V-2 may be useful depending on the application. The flame retardants provided by this invention have UL 94 ratings ranging from V-0 to V-2. The embodiments having a rating of V-0 is preferred.

The low molecular weight PDBS flame retardant produced according to this disclosure has a low color, such as an APHA solution color of less than 100 following heat ageing for eight hours at 243 °C in a test tube. Alternatively, color of the PDBS can be determined in accordance with ASTM D1500-33mm. It was found that a solution of the polybromostyrene produced in accordance with this disclosure dissolved in toluene has a color value less than 2, preferably less than 1, more preferably less than 0.7, when tested in accordance with ASTM D1500-33mm. In certain embodiments, color value according to ASTM D1500-33mm was about 0.5.

The flame retardant disclosed herein may be used with a variety of other flame retardants and/or synergists or flame retardant adjuvants as known in the art. For example, the flame retardant of the invention may be formulated with one or more materials selected from:
carbon black, graphite, carbon nanotubes, siloxanes, polysiloxanes; polyphenylene ether (PPE), phosphine oxides and polyphosphine oxides, e.g., benzylic phosphine oxides, poly benzylic phosphine oxides and the like; melamine, melamine derivatives and melamine condensation products, melamine salts such as, but not limited to, melamine cyanurate, melamine borate, melamine phosphates, melamine metal phosphates, melam, melem, melon, and the like;
inorganic compounds including clays, metal salts such as hydroxides, oxides, oxide hydrates, borates, carbonates, sulfates, phosphates, phosphites, hypophosphites, silicates, mixed metal salts, etc., e.g., talc and other magnesium silicates, calcium silicate, aluminosilicate, aluminosilicate as hollow tubes (DRAGONITE), calcium carbonate, magnesium carbonate, barium sulfate, calcium sulfate, HALLOYSITE or boron phosphate, calcium molybdate, exfoliated vermiculite, zinc stannate, zinc hydroxystannate, zinc sulfide and zinc borate, zinc molybdate (or complexes thereof, e.g., KEMGARD 911B), zinc molybdate/magnesium hydroxide complex (e.g., KEMGARD MZM), zinc molybdate/magnesium silicate complex (KEMGARD 911C), calcium molybdate/zinc complex (e.g., KEMGARD 911A), zinc phosphate (or complexes thereof, e.g., KEMGARD 981), magnesium oxide or hydroxide, aluminum oxide, aluminum oxide hydroxide (Boehmite), aluminum trihydrate, silica, tin oxide, antimony oxide (III and V) and oxide hydrate, titanium oxide, and zinc oxide or oxide hydrate, zirconium oxide and/or zirconium hydroxide and the like;
impact modifiers, preferably selected from chlorinated polyolefins, and rubber elastomers, such as Styrene-Ethylene-Butylene-Styrene (SEBS), ethylene propylene diene monomer (EPDM), styrene-butadiene-styrene (SBS), and poly(Styrene-block-lsoButylene-block-Styrene) (SIBS); and polystyrene-polybutadiene, polystyrene-poly (ethylene-propylene), polystyrene-polyisoprene, poly (α-methylstyrene) -polybutadiene, polystyrene-poly(ethylene-propylene)-polystyrene, polystyrene-poly(ethylene-butylene)-polystyrene, polystyrene- (ethylene-butylene / styrene copolymer) -polystyrene, polystyrene-polyisoprene-polystyrene;
compatibilizers, such as maleic anhydride grafted polymers, glycidyl methacrylate grafted polymers, ethylene-ethylacrylate (EEA) copolymers, ethylene-butylacrylate (EBA), ethylene methacrylate (EMA) copolymer, and the like.

The flame retardant of the invention may also be formulated with other flame retardants such as other halogenated flame retardants, alkyl or aryl phosphine oxide flame retardants, alkyl or aryl phosphate flame retardants, alkyl or aryl phosphonates, alkyl or aryl phosphinates, and salts of alkyl or aryl phosphinic acid.

In many embodiments, a flame retardant polymer composition according to the present disclosure comprises (i) a polymer, (ii) a polybromostyrene flame retardant material of the present disclosure, and (iii) one or more additional flame retardants and/or one or more synergists or flame retardant adjuvants.

For example, in some embodiments the flame retardant polymer composition comprises one or more additional flame retardants, e.g., other halogenated flame retardants, phosphine oxide flame retardants, alkyl or aryl phosphonates, or salts of alkyl or aryl phosphinates, e.g., an aluminum tris(dialkylphosphinate) such as aluminum tris(diethylphosphinate).

In some embodiments the flame retardant polymer composition comprises one or more synergists or flame retardant adjuvants, e.g., melamine, melamine derivatives and melamine condensation products (e.g., melam, melem, melon), melamine salts, phosphine oxides and polyphosphine oxides, metal salts such as hydroxides, oxides, oxide hydrates, borates, phosphates, phosphonates, phosphites, silicates and the like, e.g. aluminum hydrogen phosphite, melem or a melamine metal phosphate, e.g., a melamine metal phosphate wherein the metal comprises aluminum, magnesium or zinc. In particular embodiments the one or more additional flame retardant, synergist or flame retardant adjuvant comprises an aluminum tris(dialkylphosphinate), aluminum hydrogen phosphite, methylene-diphenylphosphine oxide-substituted polyaryl ether, xylylenebis(diphenylphosphine oxide), 4,4'-bis(diphenylphosphinylmethyl)-1,1'-biphenyl, ethylene bis-1,2-bis-(9,10-dihydro-9-oxy-10-phosphaphenanthrene-10-oxide)ethane, melem, melam, melon, or dimelamine zinc pyrophosphate. In other embodiments the synergist is at least one metal hypophosphite of the chemical formula:

Me⁽⁺⁾ⁿ(H₂PO₂)ₙ,

where Me is a metal cation, (+)n represents the oxidation state of the metal cation and n is 2 or 3, such as calcium hypophosphite or aluminum hypophosphite.

The flame retardant polybromostyrene material of the present disclosure may be combined with an additional flame retardant, synergist or adjuvant in a range of 100:1 to 1:100 by weight of the inventive flame retardant to the total weight of additional flame retardant, synergist and/or adjuvant. In some embodiments, the flame retardant material of the present disclosure is present in a range of 10:1 to 1:10 by weight of the inventive flame retardant to the total weight of additional flame retardant, synergist and/or adjuvant, for example, weight ratios ranging from 7:1 to 1:7, 6:1 to 1:6, 4:1 to 1:4, 3:1 to 1:3 and 2:1 to 1:2. The inventive flame retardant is often the majority component in such a combination, e.g., a 10:1 to 1.2:1 ratio or a 7:1 to 2:1 ratio by weight of the inventive flame retardant material to the total weight of additional flame retardant, synergist and/or adjuvant, but the inventive material can also be the minor component of the mixture, e.g., a 1:10 to 1:1.2 ratio or a 1:7 to 1:2 ratio.

The thermally stable polybromostyrene flame retardant of the invention can be compounded into thermoplastic polymers at high temperatures, such as polyolefins, polyamides and polyterephthalate esters, without decomposing or negatively impacting the physical properties of the polymer, and the flame retardant activity is excellent. The flame retardant of the invention may be used in other polymers, with other synergists and with conventional polymer additives.

The polymer of the flame retardant composition of the present invention may be any polymer known in the art, such as polyolefin homopolymers and copolymers, rubbers, polyesters including polyalkylene terephthalates, epoxy resins, polyurethanes, polysulfones, polyimides, polyphenylene ethers, styrenic polymers and copolymers, polycarbonates, acrylic polymers, polyamides, polyacetals, and biodegradable polymers. Mixtures of different polymers, such as polyphenylene ether/styrenic resin blends, polyvinyl chloride/acrylonitrile butadiene styrene (ABS) or other impact modified polymers, such as methacrylonitrile and α-methylstyrene containing ABS, and polyester/ABS or polycarbonate/ABS and polyester or polystyrene plus some other impact modifier may also be used. Such polymers are available commercially or made by means well known in the art.

The flame retardant of the invention is particularly useful in thermoplastic polymers that are processed and/or used at high temperatures, for example, styrenic polymers including high impact polystyrene (HIPS), polyphenylene ethers (PPE), HIPS/PPE alloys, polyolefins, polyesters, polycarbonates, polyamides, and thermoplastic polyurethanes.

For example, the polymer may be a polyester-series resin, a styrenic resin, a polyamide-series resin, a polycarbonate-series resin, a polyphenylene oxide-series resin, a vinyl-series resin, an olefinic resin, an acrylic resin, epoxy resin, or a polyurethane. The polymer can be a thermoplastic or a thermoset resin and may be reinforced, e.g., glass reinforced. In some embodiments, the polymer is a thermoplastic polyolefin. More than one polymer resin may be present. In particular embodiments the polymer is polypropylene or polyethylene.

As described herein, in many embodiments of the present disclosure, the flame retardant polymer composition comprises (i) a polymer, (ii) the polybromostyrene flame retardant of the present disclosure, and (iii) one or more additional flame retardants and/or one or more synergists or flame retardant adjuvants. Thus, while the flame retardant (ii) alone exhibits excellent activity in polymer systems, it may be used in combination with (iii) one or more compounds chosen from other flame retardants, synergists and adjuvants. Exemplary compounds (iii) include alternative halogenated flame retardants, alkyl or aryl phosphine oxides, alkyl or aryl polyphosphine oxides, alkyl or aryl phosphates, alkyl or aryl phosphonates, alkyl or aryl phosphinates, salts of alkyl or aryl phosphinic acid, carbon black, graphite, carbon nanotubes, siloxanes, polysiloxanes, polyphenylene ether, melamine, melamine derivatives, melamine condensation products, melamine salts, metal hydroxides, metal oxides, metal oxide hydrates, metal borates, metal carbonates, metal sulfates, metal phosphates, metal phosphonates, metal phosphites, metal hypophosphites, metal silicates, and mixed metal salts. For example, the one or more compounds (iii) may be chosen from aluminum tris(dialkylphosphinate), aluminum hydrogen phosphite, benzylic phosphine oxides, poly benzylic phosphine oxides, melam, melem, melon, melamine phosphates, melamine metal phosphates, melamine cyanurate, melamine borate, talc, clays, calcium silicate, aluminosilicate, aluminosilicate as hollow tubes, calcium carbonate, magnesium carbonate, barium sulfate, calcium sulfate, boron phosphate, calcium molybdate, exfoliated vermiculite, zinc stannate, zinc hydroxystannate, zinc sulfide, zinc borate, zinc molybdate, zinc phosphate, magnesium oxide, magnesium hydroxide, aluminum oxide, aluminum oxide hydroxide, aluminum trihydrate, silica, tin oxide, antimony oxide (III and V), antimony (III and V) oxide hydrate, titanium oxide, zinc oxide, zinc oxide hydrate, zirconium oxide, and zirconium hydroxide. For example, the one or more compounds (iii) may be chosen from aluminum tris(dimethylphosphinate), aluminum tris(diethylphosphinate), aluminum tris(dipropylphosphinate), aluminum tris(dibutylphosphinate), methylene-diphenylphosphine oxide-substituted polyaryl ether, xylylenebis(diphenylphosphine oxide), 1,2-bis-(9,10-dihydro-9-oxy-10-phosphaphenanthrene-10-oxide)ethane, 4,4'-bis(diphenylphosphinylmethyl)-1,1'-biphenyl, melam, melem, melon, and dimelamine zinc pyrophosphate.

In some embodiments, the flame retardant polymer composition comprises one or more compounds chosen from hydrotalcite clays, metal borates, metal oxides, and metal hydroxides, such as metal borates, metal oxides, or metal hydroxides wherein the metal is zinc or calcium.

In certain embodiment, the flame retardant polymer composition contains an impact modifier. Generally, impact modifiers are rubbers or elastomers. Suitable impact modifiers in the practice of this invention include ethylene octene copolymers and ethylene hexene copolymers. Ethylene octene copolymers are preferred impact modifiers in the practice of this invention. Mixtures of impact modifiers can be used if desired.

Impact modifiers are typically about 1 wt % or more, preferably about 3 wt % or more, or about 1 wt % to about 40 wt %, preferably about 3 wt % to about 30 wt %, more preferably about 7 wt % to about 20 wt %, based on the total weight of the final composition. When more than one impact modifier is present in the additive composition, these values refer to the combined amount of impact modifiers present in the additive composition.

Compatibilizers as described above may also be included in the flame retardant polymer composition.

The concentration of the inventive flame retardant in the polymer composition is of course dependent on the exact chemical composition of the flame retardant, the polymer and other components found in the final polymer composition. For example, when used as the sole flame retarding component of a polymer formulation the inventive flame retardant may be present in a concentration of from 1 to 50%, e.g., 1 to 40%, by weight of the total weight of the final composition.

Typically, when used as the sole flame retardant there will be at least 2% of the inventive material present, for example 3% or more, 5% or more, 10% or more, 15% or more, 20% or more or 25% or more. In many embodiments, the inventive flame retardant is present in amounts up to 45%, while in other embodiments, the amount of inventive flame retardant is 40% of the polymer composition or less, e.g., 30% or less. When used in combination with other flame retardants or flame retardant synergists, less of the inventive material may be needed.

Any known compounding techniques may be used to prepare the flame retardant polymer composition of the present disclosure, for example, the flame retardant may be introduced into molten polymer by blending, extrusion, fiber or film formation etc.

The flame retardant polymer composition of the invention will often contain one or more of the common stabilizers or other additives frequently encountered in the art, such as phenolic antioxidants, hindered amine light stabilizers (HALS), the ultraviolet light absorbers, phosphites, phosphonites, alkaline metal salts of fatty acids, hydrotalcites, metal oxides, borates, epoxidized soybean oils, hydroxylamines, tertiary amine oxides, lactones, thermal reaction products of tertiary amine oxides, thiosynergists, basic co-stabilizers, for example, melamine, melem, etc., polyvinylpyrrolidone, dicyandiamide, triallyl cyanurate, urea derivatives, hydrazine derivatives, amines, polyamides, polyurethanes, hydrotalcites, alkali metal salts and alkaline earth metal salts of higher fatty acids, for example, Ca stearate, calcium stearoyl lactate, calcium lactate, Zn stearate, Zn octoate, Mg stearate, Na ricinoleate and K palmitate, antimony pyrocatecholate or zinc pyrocatecholate, nucleating agents, clarifying agents, etc.

Other additives may also be present, for example, plasticizers, lubricants, emulsifiers, pigments, dyes, optical brighteners, other flame proofing agents, anti-static agents, blowing agents, anti-drip agents, e.g., PTFE, and the like. Optionally the polymer may include fillers and reinforcing agents, for example, calcium carbonate, silicates, glass fibers, talc, kaolin, mica, barium sulfate, metal oxides and hydroxides, carbon black and graphite. Such fillers and reinforcing agents may often be present at relatively high concentrations, including formulations where the filler or reinforcement is present in concentrations of over 50 wt% based on the weight of the final composition. More typically, fillers and reinforcing agents are present from about 5 to about 50 wt%, e.g., about 10 to about 40 wt% or about 15 to about 30 wt% based on the weight of the total polymer composition.

In some embodiments, the flame retardant polymer composition of the present disclosure is formulated with any one or more materials selected from carbon black, graphite, carbon nanotubes, siloxanes, polysiloxanes, talc, calcium carbonate, magnesium carbonate, barium sulfate, calcium sulfate, calcium silicate, magnesium silicate, aluminosilicate hollow tubes (DRAGONITE), Halloysite, boron phosphate, calcium molybdate, exfoliated vermiculite, zinc stannate, zinc hydroxystannate, zinc sulfide, zinc borate, zinc molybdate (or complexes thereof, e.g., KEMGARD 911B), zinc molybdate/magnesium hydroxide complex (e.g., KEMGARD MZM), zinc molybdate/magnesium silicate complex (KEMGARD 911C), calcium molybdate/zinc complex (e.g., KEMGARD 911A), zinc phosphate (or complexes thereof, e.g., KEMGARD 981) and the like; hydroxides, oxides, and oxide hydrates of group 2, 4, 12, 13, 14, 15 (semi)metals, e.g., magnesium oxide or hydroxide, aluminum oxide, aluminum oxide hydroxide (Boehmite), aluminum trihydrate, silica, silicates, tin oxide, antimony oxide (III and V) and oxide hydrate, titanium oxide, and zinc oxide or oxide hydrate, zirconium oxide and/or zirconium hydroxide and the like; melamine and urea based resins such as melamine cyanurate, melamine borate, melamine polyphosphate, melamine pyrophosphate, polyphenylene ether (PPE) and the like; and clays, including e.g., hydrotalcite, boehmite, kaolin, mica, montmorillonite, wollastonite, nanoclays or organically modified nanoclays and the like.

In some embodiments, the flame retardant polymer composition of the present disclosure is formulated with any one or more materials selected from zinc borate, zinc stannate, polysiloxanes, kaolin, silica, magnesium hydroxide, zinc molybdate complex (e.g., KEMGARD 911B), zinc molybdate/magnesium hydroxide complex (e.g., KEMGARD MZM), zinc molybdate/magnesium silicate complex (KEMGARD 911C), calcium molybdate/zinc complex (e.g., KEMGARD 911A), zinc phosphate complex (e.g., KEMGARD 981), and melamine-poly(metal phosphate) (e.g., melamine-poly(zinc phosphate) (Safire 400)).

The following specific examples are provided for purposes of illustrating the invention, and no limitations on the invention are intended thereby.

### EXAMPLES

The products of Examples 1-4 were analyzed by gel permeation chromatography (GPC) using styrene standards and THE as the eluent to obtain number-average molecular weight. Determination of relative purity of final product was deduced by dissolution of final product in deuterated chloroform and analyzed by ¹H NMR spectroscopy. Thermogravimetric analysis was performed using a TA Instruments Q-500 at a heating rate of 10°C/min with nitrogen atmosphere. Color value was determined by dissolving 1.0 g of PDBS in 50 mL toluene and measuring in accordance with ASTM D1500-33mm.

### Example 1: Preparation polydibromostyrene (PDBS) by suspension polymerization

7.2 L of deionized water was added to a four-neck 12 L round bottom flask, equipped with water-cooled reflux condenser, thermocouple, mechanical stirrer, a stopper and a heating mantle below. To this liquid was charged 12 g of 87-89% hydrolyzed polyvinyl alcohol (M_{w} 146,000-186,000 g/mol) and stirred at 200-450 RPM. The solution was heated to 50 °C. A separate beaker was charged with 809 g of dibromostyrene monomer (mixture of mono-, di- and tribromostyrene manufactured by Lanxess), 12.48 g of Vazo^{™} 52 oil-soluble azonitrile free radical initiator (Chemours), and 18 mL of dodecyl mercaptan. The monomer solution was stirred with a magnetic stir bar on a magnetic stir plate until complete dissolution of all solids occurred. The monomer solution was transferred to the 12 L flask by funnel. The heterogeneous solution was stirred at 200-450 RPM for 1 h at 50 °C. The temperature of the solution was increased to 90 °C and allowed to stir for 16 h. After 16 h, heating was removed, and the solution cooled to 50-60 °C. 3-5 L of deionized water was added to the flask and stirred for 30 minutes. The solution was decanted to remove as much water as possible, leaving behind polydibromostyrene beads.

A second portion of 3-5 L of deionized water was added to the flask and stirred for 30 minutes. The solution was decanted to remove as much water as possible. A third portion of 3-5 L of deionized water was added to the flask and stirred for 30 minutes. The solution was filtered using a Buchner funnel with vacuum through 934-AH filter paper. The resulting solid was rinsed with 5 L of acetone and dried for 1 h with vacuum. The product was transferred to a crystallization dish and dried at 60 °C for 18 h in a convection oven, resulting in an off-white powder.
% Br 63.7 - 64.2;
Mn 4300;
TGA 5% loss (°C) 299;
Color value 0.54.

### Example 2: Preparation polydibromostyrene (PDBS) by bulk polymerization

A Berstorff 75 mm twin screw extruder was continuously fed at 900 Ib/h (6804 g/min) a mixture of dibromostyrene monomer (mixture of mono-, di- and tribromostyrene manufactured by Lanxess), Vazo^{™} 52 oil-soluble azonitrile free radical initiator (Chemours), and dodecylmercaptan. The mixture was prepared by adding into a heated static tube prepolymerizer containing the monomer, Vazo^{™} 52 at 60 g/min (25 wt% in toluene, 0.88 wt.% based on monomer) and dodecyl mercaptan at 98 g/min (1.4 wt.%, based on monomer). Cumyl hydroperoxide was added into the extruder at 20 g/min (0.3 wt.%). The temperature profile was maintained at 150-180 °C. The molten material was pelletized through a dye and cooled via water bath then dried to give a glassy, amber material. Analysis showed:
% Br 64.0;
Mn 3100;
TGA 5% loss (°C) 340.

### Example 3: Preparation polydibromostyrene (PDBS) by bulk polymerization

The process of Example 2 but dropping dodecyl mercaptan to 93 g/min (1.4 wt.%) and increasing CHP to 40 g/min (0.6 wt.%). Analysis showed:
% Br 65.1;
Mn 3000;
TGA 5% loss (°C) 347.

### Example 4: Preparation polydibromostyrene (PDBS) by bulk polymerization

The process of Example 2 was repeated but dropping dodecyl mercaptan to 88 g/min (1.3 wt.%) and increasing CHP to 48 g/min (0.7 wt.%). Analysis showed:
% Br 65.8;
Mn 3300;
TGA 5% loss (°C) 353;
Color value 0.69.

### Example 5: Particle size of polymeric bromostyrene

The particle size of PDBS material made according to Examples 1-4 was determined using a Sympatec HELOS/KR RODOS laser diffraction sensor with VIBRI/L dry dispersion plate. The exemplary inventive material was compared to a commercially available polymeric flame retardant product FR1 prepared by bromination of polystyrene (Br-PS) and having Mn 885 and TGA 5% loss (°C) 366 as measured by the same methods as the material of Ex. 1-4. The molecular weight and the particle size distribution results are listed in Table 1.

**Table 1**

| | Ex. 1 (Susp. PDBS) | Ex. 2 (Bulk PDBS) | Ex. 3 (Bulk PDBS) | Ex. 4 (Bulk PDBS) | Comparative FR1 (Br-PS) |
|---|---|---|---|---|---|
| Mn | 4,300 | 3,100 | 3,000 | 3,300 | 900 |
| PSD D10 (µm) | 126 | 67 | 67 | 72 | 4 |
| PSD D50 (µm) | 196 | 341 | 392 | 362 | 18 |
| PSD D90 (µm) | 283 | 678 | 737 | 726 | 232 |

### Example 6: Performance data and mechanical properties of low molecular weight PDBS

The material prepared according to Examples 1 and 4 was utilized as a flame retardant in unfilled polypropylene ("PP") formulations containing antimony trioxide ("ATO"), CHARGUARD^{™} 1000 organoclay from Elementis ("CH 1000"), and zinc borate ("ZnB") and subjected to the UL 94 vertical burn test. Amounts of the components and the flammability test results, of these samples, are listed in Table 2. Mechanical properties are listed in Table 3. The PP used was Pro-fax^{™} SG 702 from Lyondell Basell.

The Izod impact measurement/notched impact strength was carried out in accordance with ASTM D 256. Tensile strength, tensile modulus and elongation were measured according to ASTM D-638. Flexural strength, flexural modulus and bending were measured according to ASTM D 790. The heat deflection temperature (HDT) was measured according to ASTM D648.

Spiral length is an indication of the melt flow index (MFI) and was determined by injection molding the flame retardant polymer composition into a spiral flow mold plate and measuring the length of the sample.

**Table 2**

| | Ex. 1 (Susp. PBDS, Mn 4300) | Ex. 4 (Bulk PBDS, Mn 3300) |
|---|---|---|
| **Formula** | PP: 40%PDBS /10% ATO /2% CH 1000 /1% ZnB | PP: 40%PDBS /10% ATO /2% CH 1000 /1% ZnB |
| in unfilled PP | | |
| **FR Properties UL 94** | | |
| 1.6 mm | V-0 | V-0 |
| 3.2 mm | V-0 | V-0 |

**Table 3**

| | Ex. 1 (Susp. PBDS, Mn 4300) | Ex. 4 (Bulk PBDS, Mn 3300) |
|---|---|---|
| **Formula** | PP: 40%PDBS /10% ATO /2% CH 1000 /1% ZnB | PP: 40%PDBS /10% ATO /2% CH 1000 /1% ZnB |
| in unfilled PP | | |
| **Mechanical Properties** | | |
| Tensile Strength @ fail, MPa | 14.9 | 15.8 |
| Tensile Modulus, MPa | 2050 | 2162 |
| Elongation @ fail, % | 1.0 | 1.0 |
| Flexural Strength, MPa | 24.2 | 25.0 |
| Flexural Modulus, MPa | 1920 | 1935 |
| Notched Impact Strength, J/m | 18.3 | 17.7 |
| Spiral length, cm | 137 | 133 |

### Example 6: Effect of impact modifier

The effect of adding impact modifier to material prepared according to Examples 1 and 4 was evaluated in talc-filled polypropylene (PP) formulations containing antimony trioxide (ATO), CHARGUARD^{™} 1000 organoclay ("CH 1000"), zinc borate (ZnB), chlorinated polyethylene (CPE6025) and subjected to the UL 94 vertical burn test. The formulations were compared to a control formulation containing FIREMASTER 2100 (FM2100) and ATO. Amounts of the components and the flammability test results of these samples are listed in Table 4. The PP used was PRO-FAX SG 702 from Lyondell Basell. FIREMASTER 2100 was from Lanxess. CPE6025 was from Weifang Dehua. CH 1000 was from Elementis

**Table 4**

| Formula | 6-C | 6-1 | 6-2 | 6-3 | 6-4 | 6-5 | 6-6 |
|---|---|---|---|---|---|---|---|
| PP | qs | qs | qs | qs | qs | qs | qs |
| FR Ex. 1 | 0 | 40 | 40 | 0 | 0 | 0 | 0 |
| FR Ex. 4 | 0 | 0 | 0 | 40 | 40 | 40 | 40 |
| ATO | 10 | 10 | 10 | 10 | 10 | 10 | 10 |
| CH 1000 | 0 | 2 | 2 | 2 | 2 | 2 | 2 |
| ZnB | 0 | 1 | 1 | 1 | 1 | 1 | 1 |
| SEBS | 0 | 0 | 10 | 0 | 5 | 10 | 10 |
| FM2100 | 25 | 0 | 0 | 0 | 0 | 0 | 0 |
| CPE7025 | 0 | 0 | 0 | 0 | 0 | 0 | 1 |
| | | | | | | | |
| UL 94 1.6 mm | | V-0 | V-0 | V-0 | V-0 | V-0 | V-0 |
| UL 94 3.2 mm | | V-0 | V-0 | V-0 | V-0 | V-0 | V-0 |

A graphical comparison of the effect of impact modifier on mechanical properties of flame retardant polymer formulations of Example 6 is shown in FIG. 1.

### Example 7: Performance comparison of low molecular weight PDBS vs. alternative flame retardants in polypropylene

The material of Example 1 was formulated with 8-10% antimony trioxide (ATO) in 20% talc-filled and unfilled polypropylene (PP) and compared to competitive FR formulations. The samples were subjected to the UL 94 vertical burn test. The PP used was PRO-FAX SG 702 from Lyondell Basell. FIREMASTER 2100R (FM2100R) was from Lanxess. Chlorinated polyethylene CPE6025 was from Weifang Dehua. Amounts of the components and the flammability test results, along with some afterglow times of these samples at various timepoint are listed in Tables 5 and 7. Mechanical properties are provided in Tables 6 and 8.

Afterglow was determined according to UL 94.

Heat deflection temperature (HDT) was measured according to ASTM D648.

**Table 5 - Talc-filled PP**

| Formula | UL 94 1.6mm (48h) | UL 94 1.6mm (7 days) | Total afterglow |
|---|---|---|---|
| 30 % FR Ex. 1/ 10% ATO | V-0 | V-0 | 80 sec |
| in 20% Talc-filled PP | | | |
| 30 % FR Ex. 1/8% ATO | V-1 | V-2 | 19 sec |
| in 20% Talc-filled PP | | | |
| 21% FM2100R/ 7% ATO | V-0 | V-0 | 19 sec |
| in 20% Talc filled PP | | | |
| 25.7% Albermarle BrFR* / 10% ATO | V-0 | V-0 | 123 sec |
| in 14% Talc-filled PP | | | |

| | | | |
|---|---|---|---|
| * Albermarle BrFR data taken from US20230272185A1 | | | |

**Table 6 - Talc-Filled PP**

| **Formula** | 30 % FR Ex. 1/ 10% ATO | 30 % FR Ex. 1/ 8% ATO | 21% FM2100R/ 7% ATO | 30% FR Ex. 1/ 10%ATO/ 1 % CPE |
|---|---|---|---|---|
| in 20% Talc-filled PP | | | | |
| **Mechanical Properties** | | | | |
| Tensile Strength @ fail, MPa | 16.1 | 16.0 | 16.7 | 15.6 |
| Tensile Modulus, MPa | 4209 | 3367 | 3179 | 3698 |
| Elongation @ fail, % | 0.6 | 0.9 | 1.63 | 0.8 |
| Flexural Strength, MPa | 24.4 | 24.8 | 25.2 | 22.4 |
| Flexural Modulus, MPa | 3462 | 3231 | 2832 | 3112 |
| Notched Impact Strength, J/m | 14.4 | 18.4 | 56.1 | 18.1 |
| Spiral length, cm | Not tested | 121 | 106 | 116 |
| HDT, °C @ 1.82 MPa | 92.4 | 84.7 | 68.6 | Not tested |
| | | | | |
| UL 94 1.6 mm | V-0 | V-2 | V-0 | V-0 |

**Table 7 - Unfilled PP**

| **Formula** in unfilled PP | UL94 1.6mm (48h) | UL94 1.6mm (7 days) | Total afterglow time |
|---|---|---|---|
| 40 % FR Ex. 1/ | V-0 | V-0 | 351 sec |
| 10% ATO/ | | | |
| 2% CH 1000/1 | | | |
| % Zinc Borate | | | |
| 40 % FR Ex. 1/ | fail | V-0 | 571 sec |
| 10% ATO/ | | | |
| 2% CH 1000 | | | |

**Table 8 - Unfilled PP**

| **Formula** | Pure PP | 40% PDBS Ex. 1 / |
|---|---|---|
| | | 10% ATO / |
| | | 2% CH 1000/ |
| | | 1% ZnB |
| **Mechanical Properties** | | |
| Tensile Strength @ fail, MPa | Not tested | 14.9 |
| Tensile Modulus, MPa | Not tested | 2050 |
| Elongation @ fail, % | Not tested | 1.0 |
| Flexural Strength, MPa | 24.1 | 24.2 |
| Flexural Modulus, MPa | 1040 | 1920 |
| Notched Impact Strength, J/m | 237 | 18.3 |
| Spiral length, cm | 126 | 137 |
| UL94 1.6 mm | fail | V-0 |

PDBS prepared using bulk and suspension polymerization preparation methods contains similar bromine percentage, molecular weight, flame retardant and mechanical properties. Bulk polymerization tends to result in higher thermal stability and different particle morphology as compared to material prepared using suspension polymerization. Addition of an impact modifier, such as SEBS can improve elongation at break and Izod impact strength while maintaining other mechanical properties. Material made by either process is a suitable replacement for DBDPE and DecaBDE in polyolefin.

While the invention has been illustrated and described in detail in the drawings and foregoing description, the same is to be considered as illustrative and not restrictive in character, it being understood that only the preferred embodiment has been shown and described and that all changes and modifications that come within the spirit of the invention are desired to be protected.

## Claims

1. A process for the polymerization of brominated styrenes having a molecular weight below 10,000, comprising the steps of:
dissolving a hydrocarbon soluble initiator and a hydrocarbon soluble chain transfer agent in a bromostyrene monomer to form a dissolved mixture; and
dispersing the dissolved mixture in an aqueous medium containing an organic suspending agent,
wherein pH of the aqueous medium does not need to be controlled.

2. The process according to claim 1, further comprising the step of agitating the dispersed reaction mixture at a temperature of about 30 to about 60°C, preferably about 40 to about 55°C, more preferably about 50°C, most preferably about 50°C, to form droplets.

3. The process according to claim 2, further comprising increasing the temperature to about 70 to about 140°C, preferably about 80 to less than 110°C, more preferably about 85 to about 100°C, most preferably about 90°C, to polymerize and form beads.

4. The process according to any of the preceding claims, wherein the hydrocarbon soluble initiator is charged as about 0.05 to about 5.0 wt%, preferably about 0.5 to about 2.5 wt%, more preferably about 1.0 to about 2.0 wt%, based on the weight of the bromostyrene monomer.

5. The process according to any of the preceding claims, wherein the hydrocarbon soluble initiator is an azo compound, preferably 2,2'-azobis(2,4-dimethylvaleronitrile).

6. The process according to any of the preceding claims, wherein the hydrocarbon soluble chain transfer agent is charged as about 0.05 to about 5.0 wt%, preferably about 0.5 to about 2.5 wt%, more preferably about 1.5 to about 2.0 wt%, based on weight of the bromostyrene monomer.

7. The process according to any of the preceding claims, wherein the hydrocarbon soluble chain transfer agent is a thiol compound, preferably dodecylmercaptan.

8. The process according to any of the preceding claims, wherein the bromostyrene monomer comprises a mixture of mono-, di-, and tribromostyrene monomers.

9. The process according to any of the preceding claims, wherein the bromostyrene monomer comprises about 50 to about 70 wt% bromine, preferably about 55 to about 65 wt% bromine, more preferably about 60 to about 64 wt% bromine.

10. The process according to any of the preceding claims, wherein the concentration of the organic suspending agent is about 0.5 to about 5.0 g/L, preferably about 1.0 to about 2.5 g/L, more preferably about 1.5 to about 1.75 g/L, most preferably about 1.7 g/L.

11. The process according to any of the preceding claims, wherein the organic suspending agent is polyvinyl alcohol, preferably 87-89% hydrolyzed polyvinyl alcohol having a weight-average molecular weight of 146,000-186,000 g/mol.

12. The process according to any of the preceding claims, wherein pH of the aqueous medium does not need to be maintained above 5.9.

13. A process for preparing polydibromostyrene having a molecular weight below 10,000, comprising the steps of
dissolving 2,2'-azobis(2,4-dimethylvaleronitrile) and dodecylmercaptan in a mixture of mono-, di-, and tribromostyrene monomers to form a dissolved mixture;
dispersing the dissolved mixture in an aqueous medium containing hydrolyzed polyvinyl alcohol having a weight-average molecular weight of 146,000-186,000 g/mol;
agitating the dispersion at temperature of about 45 to about 55°C to form droplets; and
increasing the temperature to about 85 to about 95°C to polymerize the droplets.

14. The process according to claim 13, wherein the hydrocarbon soluble initiator is charged as 0.05 to about 5.0 wt%, preferably about 0.5 to about 2.5 wt%, more preferably about 1.0 to about 2.0 wt%, based on the weight of the bromostyrene monomer, and the hydrocarbon soluble chain transfer agent is charged as about 0.05 to about 5.0 wt%, preferably about 0.5 to about 2.5 wt%, more preferably about 1.5 to about 2.0 wt%, based on weight of the bromostyrene monomer.

15. A flame retardant comprising polybromostyrene produced by the process according to any of the preceding claims, wherein the molecular weight of the polymer is about 1,000 to about 10,000 g/mol based on gel permeation chromatography and polystyrene standards.

16. The flame retardant according to claim 15, wherein the polybromostyrene has a color value of less than 1, preferably less than 0.7, more preferably less than 0.6, when a 20 mg/mL solution of the flame retardant in toluene is measured in accordance with ASTM D1500-33mm.

17. A flame retardant composition comprising the flame retardant according to claims 15 or 16 and an impact modifier, preferably selected from, chlorinated polyolefins, and rubber elastomers, such as Styrene-Ethylene-Butylene-Styrene (SEBS), ethylene propylene diene monomer (EPDM), styrene-butadiene-styrene (SBS), and poly(Styrene-block-lsoButylene-block-Styrene) (SIBS), and optionally, a compatibilizer, such as maleic anhydride grafted polyolefins.

18. A flame retardant polymer composition comprising the flame retardant of claims 15 or 16 or the flame retardant composition of claim 17 and a thermoplastic polymer.

19. A process for preparing polydibromostyrene having a molecular weight below 10,000, comprising the steps of
heating a first hydrocarbon soluble initiator, preferably 2,2'-azobis(2,4-dimethylvaleronitrile), a thiol compound, preferably dodecylmercaptan, and a liquid bromostyrene monomer comprising a mixture of mono-, di-, and tribromostyrene monomers in a prepolymerizer at about 150 to about 180 °C to form a monomer mixture;
feeding the heated monomer mixture into an extruder;
adding a second hydrocarbon soluble initiator, preferably cumyl hydroperoxide, into the extruder; and
extruding pellets of polybromostyrene,
wherein the first hydrocarbon soluble initiator is charged as about 0.05 to about 5.0 wt%, preferably about 0.25 to about 2.5 wt%, more preferably about 0.5 to about 1.0 wt%, based on the weight of the bromostyrene monomer,
wherein the thiol compound is charged as about 0.05 to about 5.0 wt%, preferably about 0.5 to about 3.0 wt%, more preferably about 1.0 to about 2.0 wt%, based on weight of the of bromostyrene monomer,
wherein the bromostyrene monomer comprises about 50 to about 70 wt% bromine, preferably about 55 to about 65 wt% bromine, more preferably about 60 to about 64 wt% bromine, and
wherein the second hydrocarbon soluble initiator is charged as about 0.1 to about 2.5 wt%, preferably about 0.2 to about 1.5 wt%, more preferably about 0.3 to about 1.0 wt%, based on the weight of the bromostyrene monomer.

20. The process according to claim 19, wherein the extruder is a twin screw extruder, and feed rate into the extruder is about 900 Ib/h (6804 g/min).
